# EUROPEAN PATENT SPECIFICATION

(11) **EP 2 619 967 B1**
(45) Date of publication and mention of the grant of the patent: **20.06.2018**
(21) Application number: 10776807.9
(22) Date of filing: 21.09.2010
(51) Int. Cl.: H04M 1/725

(54) **SYSTEM AND METHOD OF ENHANCING MESSAGES**
SYSTEM UND VERFAHREN FÜR ERWEITERTE NACHRICHTEN
SYSTÈME ET PROCÉDÉ D'ENRICHISSEMENT DE MESSAGES

(43) Date of publication of application: 31.07.2013
(73) Proprietor: Sony Mobile Communications Inc., Shinagawa-ku Tokyo 140-0002 (JP)
(72) Inventor: DE LEON, David, SE-221 88 Lund (SE)
(74) Representative: Zacco Sweden AB
(86) International application number: PCT/IB2010/002367
(87) International publication number: WO 2012/038771

(56) References cited:
- EP-A2- 1 197 879
- EP-A2- 1 583 337
- GB-A- 2 456 356

## Description

### TECHNICAL FIELD OF THE INVENTION

The present invention relates generally to communications, and more particularly to a method and system for enhancing textual messages by appending associated media content.

### DESCRIPTION OF THE RELATED ART

Portable wireless electronic devices, such as mobile telephones, are becoming increasingly popular. Such devices are often used to compose and send messages, such as electronic mail messages and text messages. Several barriers exist that prevent electronic device users from sending a greater number of media rich messages, such as MMS. Initially, there is the cognitive and procedural effort of creating and/or appending media to a message. A user may find difficulties associated with learning how to operate a particular user interface, as well as the effort of progressing through all of the steps required to locate, select and send media content together with the text. In addition, a there is the creative effort associated with coming up with something to say, express or share. A user may occasionally want to communicate or express himself or herself, but find it difficult to know what to say. Moreover, the intention of a user in sending a message may be missed, as the textual message is not particularly expressive and/or is not visual.

GB 2 456 356 A discloses a system for enabling enhancement of a text-based message with visual assets.

EP 1 197 879 A2 discloses a method for integrated retrieval and annotation of stored image involving running a user application in which text entered by a user is continuously monitored to isolate the context expressed by the text.

EP 1 583 337 A2 discloses an e-mail creating apparatus which creates a message of an e-mail.

### SUMMARY

The invention is as set out in the independent claims 1 and 6, preferred forms being set out in the dependent claims 2 to 5 and 7 to 12. To enhance the presentation of expressiveness of transmitted messages, the method and system of the present disclosure provides an automatic and dynamic audiovisual content search conducted in real time, based on the message text being composed by a user. The user may select an item, such as an image, a video or sound, from the selection of audiovisual content items identified by the search to be appended to the message.

According to one aspect of the disclosure, an electronic device having a message enhancement function includes a display for displaying text input for a message undergoing composition by a user of the electronic device; and a control circuit configured to: receive the text input from the user; analyze the text input from the user; identify one or more items of audiovisual content having a content related to the text input; drive display of a selectable representation of each of the items of audiovisual content on the display; and construct a message that includes the text input and a user selected one of the items of audiovisual content.

According to one embodiment of the electronic device, the control circuit is further configured to add additional or revised text input from the user, and revise the one or more items of audiovisual content identified based on the additional or revised text input.

According to one embodiment of the electronic device, the control circuit is further configured to rank said one or more items of audiovisual content identified for said selectable representation display.

According to one embodiment of the electronic device, the audiovisual content comprises still images.

According to one embodiment of the electronic device, the audiovisual content comprises audio.

According to one embodiment of the electronic device, the audiovisual content comprises video.

According to one embodiment of the electronic device, the electronic device is a mobile telephone.

According to another aspect of the disclosure, a method of message enhancement, includes displaying text input for a message undergoing composition by a user of the electronic device; analyzing the text input from the user; identifying one or more items of audiovisual content having a content related to the text input; displaying a selectable representation of each of the items of audiovisual content on the display; and constructing a message that includes the text input and a user selected one of the items of audiovisual content.

According to one embodiment, the method further includes adding additional or revised text input from the user, and revising the one or more items of audiovisual content identified based on the additional or revised text input.

According to one embodiment, the method further includes ranking said one or more items of audiovisual content identified for said selectable representation display.

According to one embodiment of the method, the audiovisual content comprises still images.

According to one embodiment of the method, the audiovisual content comprises audio.

According to one embodiment of the method, audiovisual content comprises video.

These and further features of the present invention will be apparent with reference to the following description and attached drawings. In the description and drawings, particular embodiments of the invention have been disclosed in detail as being indicative of some of the ways in which the principles of the invention may be employed, but it is understood that the invention is not limited correspondingly in scope.

Features that are described and/or illustrated with respect to one embodiment may be used in the same way or in a similar way in one or more other embodiments and/or in combination with or instead of the features of the other embodiments.

It should be emphasized that the term "comprises/comprising" when used in this specification is taken to specify the presence of stated features, integers, steps or components but does not preclude the presence or addition of one or more other features, integers, steps, components or groups thereof.

### BRIEF DESCRIPTION OF THE DRAWINGS

Fig. 1 is a schematic illustration of an exemplary mobile device suitable for use in accordance with aspects of the present invention;
Fig. 2 is a diagrammatic illustration of components of the mobile device of Fig. 1;
Fig. 3 is a schematic diagram of a communications system in which the mobile telephone of FIG. 1 may operate;
Fig. 4 is a flow chart representing an exemplary method of message enhancing using the mobile telephone of Fig. 1; and
Figs. 5A to 5D are illustrations of an exemplary mobile telephone while displaying a representative textual message and selectable images generated by the message enhancing function.

### DETAILED DESCRIPTION OF EMBODIMENTS

Embodiments will now be described with reference to the drawings, wherein like reference numerals are used to refer to like elements throughout.

The term "electronic equipment" includes portable radio communication equipment. The term "portable radio communication equipment," which may also be referred to herein as a "mobile radio terminal," includes all equipment such as mobile telephones, pagers, communicators, i.e., electronic organizers, personal digital assistants (PDAs), smartphones, portable communication apparatus or the like.

In the present application, the invention is described primarily in the context of a mobile telephone. However, it will be appreciated that the invention is not intended to be limited to a mobile telephone and can be any type of electronic equipment.

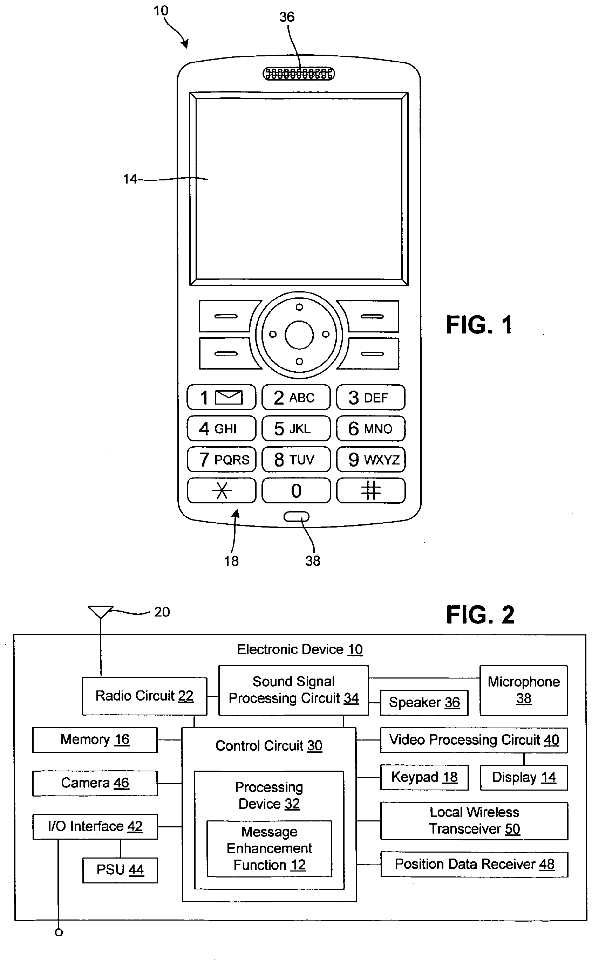

Referring initially to FIGs. 1 and 2, an electronic device 10 is shown. The electronic device 10 includes a message enhancement function 12 that is configured to provide the user with a selection of images for appending to text composed by the user, such as text for a message (e.g., an electronic mail message or a text message). Additional details and operation of the message enhancement function 12 will be described in greater detail below. The message enhancement function 12 may be embodied as executable instructions (e.g., code) that is resident in and executed by the electronic device 10. In one embodiment, the message enhancement function 12 may be one or more programs that are stored on a computer or machine readable medium. The message enhancement function 12 may be a stand-alone software application or form a part of a software application that carries out additional tasks related to the electronic device 10.

Through the following description, exemplary techniques for message enhancing are described. Also, while the message enhancement function 12 is implemented in software in accordance with an embodiment, such functionality could also be carried out via dedicated hardware or firmware, or some combination of hardware, firmware and/or software.

The electronic device 10 may include a display 14. The display 14 displays information to a user such as operating state, time, telephone numbers, contact information, various menus, etc., that enable the user to utilize the various features of the electronic device 10. The display 14 also may be used to visually display content received by the electronic device 10 and/or retrieved from a memory 16 (FIG. 2) of the electronic device 10. The display 14 may be used to present images, video and other graphics to the user, such as photographs, mobile television content, Internet pages, and video associated with games.

A keypad 18 provides for a variety of user input operations. For example, the keypad 18 may include alphanumeric keys for allowing entry of alphanumeric information (e.g., telephone numbers, phone lists, contact information, notes, text, etc.), special function keys (e.g., a call send and answer key, multimedia playback control keys, a camera shutter button, etc.), navigation and select keys or a pointing device, and so forth. Keys or key-like functionality also may be embodied as a touch screen associated with the display 14. Also, the display 14 and keypad 18 may be used in conjunction with one another to implement soft key functionality.

The electronic device 10 includes communications circuitry that enables the electronic device 10 to establish communications with another device. Communications may include calls, data transfers, and the like. Calls may take any suitable form such as, but not limited to, voice calls and video calls. The calls may be carried out over a cellular circuit-switched network or may be in the form of a voice over Internet Protocol (VoIP) call that is established over a packet-switched capability of a cellular network or over an alternative packet-switched network (e.g., a network compatible with IEEE 802.11, which is commonly referred to as WiFi, or a network compatible with IEEE 802.16, which is commonly referred to as WiMAX), for example. Data transfers may include, but are not limited to, receiving streaming content (e.g., streaming audio, streaming video, etc.), receiving data feeds (e.g., pushed data, podcasts, really simple syndication (RSS) data feeds), downloading and/or uploading data (e.g., image files, video files, audio files, ring tones, Internet content, etc.), receiving or sending messages (e.g., text messages, instant messages, electronic mail messages, multimedia messages), and so forth. This data may be processed by the electronic device 10, including storing the data in the memory 16, executing applications to allow user interaction with the data, displaying video and/or image content associated with the data, outputting audio sounds associated with the data, and so forth.

In the exemplary embodiment, the communications circuitry may include an antenna 20 coupled to a radio circuit 22. The radio circuit 22 includes a radio frequency transmitter and receiver for transmitting and receiving signals via the antenna 20.

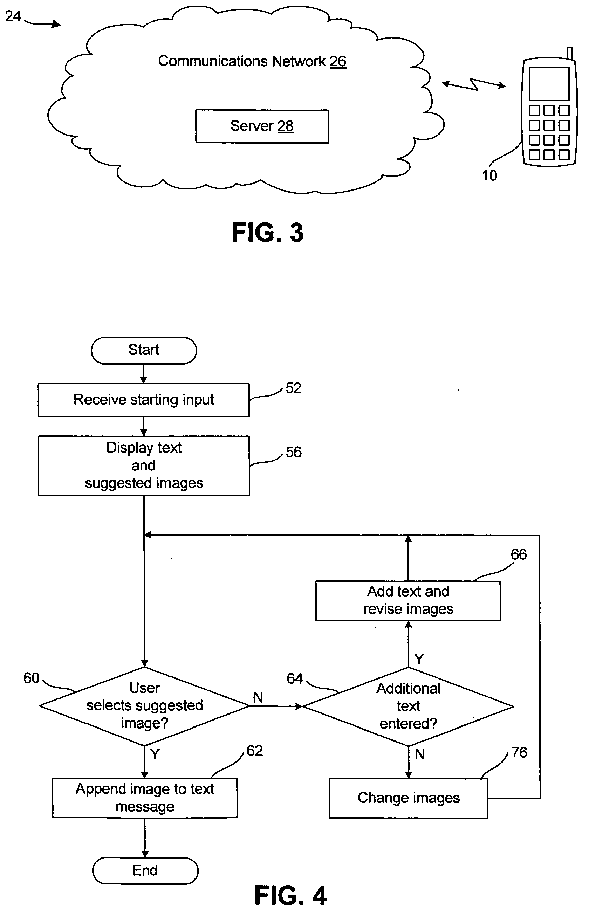

With additional reference to FIG. 3, the radio circuit 22 may be configured to operate in a mobile communications system 24. Radio circuit 22 types for interaction with a mobile radio network and/or broadcasting network include, but are not limited to, global system for mobile communications (GSM), code division multiple access (CDMA), wideband CDMA (WCDMA), general packet radio service (GPRS), WiFi, WiMAX, digital video broadcasting-handheld (DVB-H), integrated services digital broadcasting (ISDB), digital multimedia broadcasting (DMB), China multimedia mobile broadcasting (CMMB), high speed packet access (HSPA), etc., as well as advanced versions of these standards or any other appropriate standard. It will be appreciated that the electronic device 10 may be capable of communicating using more than one standard. Therefore, the antenna 20 and the radio circuit 22 may represent one or more than one radio transceiver.

The system 24 may include a communications network 26 having a server 28 (or servers) for managing calls placed by and destined to the electronic device 10, transmitting data to and receiving data from the electronic device 10 and carrying out any other support functions. The server 28 communicates with the electronic device 10 via a transmission medium. The transmission medium may be any appropriate device or assembly, including, for example, a communications base station (e.g., a cellular service tower, or "cell" tower), a wireless access point, a satellite, etc. The network 26 may support the communications activity of multiple electronic devices 10 and other types of end user devices. As will be appreciated, the server 28 may be configured as a typical computer system used to carry out server functions and may include a processor configured to execute software containing logical instructions that embody the functions of the server 28 and a memory to store such software. In alternative arrangements, the electronic device 10 may wirelessly communicate directly with another electronic device 10 (e.g., another mobile telephone or a computer) and without an intervening network.

The electronic device 10 may include a primary control circuit 30 that is configured to carry out overall control of the functions and operations of the electronic device 10. The control circuit 30 may include a processing device 32, such as a central processing unit (CPU), microcontroller or microprocessor. The processing device 32 executes code stored in a memory (not shown) within the control circuit 30 and/or in a separate memory, such as the memory 16, in order to carry out operation of the electronic device 10. For instance, the processing device 32 may execute code that implements the message enhancement function 12. The memory 16 may be, for example, one or more of a buffer, a flash memory, a hard drive, a removable media, a volatile memory, a non-volatile memory, a random access memory (RAM), or other suitable device. In a typical arrangement, the memory 16 may include a non-volatile memory for long term data storage and a volatile memory that functions as system memory for the control circuit 30. The memory 16 may exchange data with the control circuit 30 over a data bus. Accompanying control lines and an address bus between the memory 16 and the control circuit 30 also may be present.

The electronic device 10 further includes a sound signal processing circuit 34 for processing audio signals transmitted by and received from the radio circuit 22. Coupled to the sound processing circuit 34 are a speaker 36 and a microphone 38 that enable a user to listen and speak via the electronic device 10. The radio circuit 22 and sound processing circuit 34 are each coupled to the control circuit 30 so as to carry out overall operation. Audio data may be passed from the control circuit 30 to the sound signal processing circuit 34 for playback to the user. The audio data may include, for example, audio data from an audio file stored by the memory 16 and retrieved by the control circuit 30, or received audio data such as in the form of voice communications or streaming audio data from a mobile radio service. The sound processing circuit 34 may include any appropriate buffers, decoders, amplifiers and so forth.

The display 14 may be coupled to the control circuit 30 by a video processing circuit 40 that converts video data to a video signal used to drive the display 14. The video processing circuit 40 may include any appropriate buffers, decoders, video data processors and so forth. The video data may be generated by the control circuit 30, retrieved from a video file that is stored in the memory 16, derived from an incoming video data stream that is received by the radio circuit 22 or obtained by any other suitable method.

The electronic device 10 may further include one or more input/output (I/O) interface(s) 42. The I/O interface(s) 42 may be in the form of typical mobile telephone I/O interfaces and may include one or more electrical connectors. The I/O interfaces 42 may form one or more data ports for connecting the electronic device 10 to another device (e.g., a computer) or an accessory (e.g., a personal handsfree (PHF) device) via a cable. Further, operating power may be received over the I/O interface(s) 42 and power to charge a battery of a power supply unit (PSU) 44 within the electronic device 10 may be received over the I/O interface(s) 42. The PSU 44 may supply power to operate the electronic device 10 in the absence of an external power source.

The electronic device 10 also may include various other components. A camera 46 may be present for taking digital pictures and/or movies. Image and/or video files corresponding to the pictures and/or movies may be stored in the memory 16. A position data receiver 48, such as a global positioning system (GPS) receiver or the like, may be involved in determining the location of the electronic device 10. A local wireless interface 50, such as an infrared transceiver and/or an RF transceiver (e.g., a Bluetooth chipset) may be used to establish communication with a nearby device, such as an accessory (e.g., a PHF device), another mobile radio terminal, a computer or another device.

With additional reference to Fig. 4, illustrated are logical operations to implement an exemplary method of message enhancing. The exemplary method may be carried out by executing an embodiment of the message enhancement function 12, for example. Thus, the flow chart of Fig. 4 may be thought of as depicting steps of a method carried out by the electronic device 10. Although Fig. 4 shows a specific order of executing functional logic blocks, the order of executing the blocks may be changed relative to the order shown. Also two or more blocks shown in succession may be executed concurrently or with partial concurrence. Certain blocks also may be omitted.

In the illustrated exemplary embodiment, the audiovisual content items retrieved by the message enhancement function 12 are still images. However, the message enhancement function 12 described herein is not limited to still images, but includes all media, including video, audio and still images.

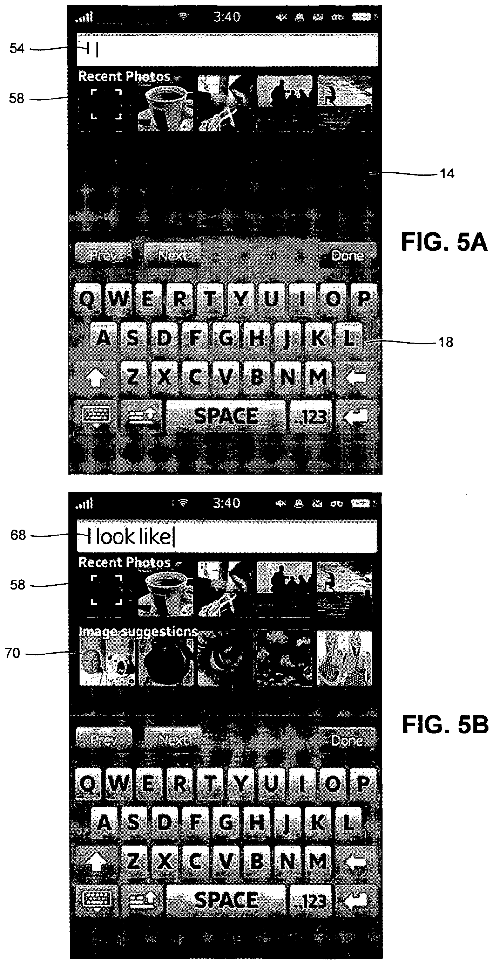

With additional reference to FIG. 5A, the logical flow for the message enhancement function 12 may begin in block 52 where a user enters starting text 54. The text may be a message text, a status update or an email. The starting text 54 may be a character (e.g., a letter, a number or symbol), a part of a word, a complete word, a complete word and a portion of a second word, a part of a phrase, or a complete phrase. The starting text 54 may be received by the control circuit 30 for processing by the message enhancement function 12. The starting text 54 may be entered in any suitable manner, including, for example, pressing one or more keys from the keypad 18, touching one or more appropriate locations of the touch screen display 14, or by speaking the starting text and using the electronic device 10 to convert the speech to text.

As indicated, the starting text 54 may include one or more characters, such as one or more letters, one or more numbers, one or more symbols or a combination of character types. For example, the starting text 54 may correspond to the first character (e.g., letter) of a word or phrase that the user desires to enter. In the illustrated example, the starting text is the English letter "I".

In block 56, and in response to input of the starting text 54, the display 14 may be controlled to display a selection of thumbnails of recent photographs or images 58 the user has viewed. The images may be photographs the user has taken, received, viewed on the web or has stored in the device camera album of the electronic device 10. In other words, the images 58 may have some recent relevance to the user.

The message enhancement function 12 may analyze the starting text 54 to determine if the starting text 54 includes a complete word. For purposes of the message enhancement function 12, a complete word need not be a complete dictionary-style word, but complete words may include acronyms and other character combinations that are commonly used in text entry for a particular meaning. As just a few examples, the characters "BFF" are commonly used by text message users to stand for "best friends forever", the characters "BRB" are commonly used by text message users to stand for "be right back", and the characters "IDK" are commonly used by text message users to stand for "I don't know".

Following block 56, the logical flow may proceed to block 60. In block 60, a determination may be made as to whether the user has selected one of the suggested images 58. Selection of a suggested image may be made by touching a corresponding spot on the display 14 or by using an input device, such as a pointing device. Selection of a suggested image may also be made by a highlight driven operation, such as by rocker keys, a joystick or by a roller ball. If a positive determination is made in block 60, the logical flow may proceed to block 62 where the selected image or a link to the selected image is appended to the text 54.

If a negative determination is made in block 60, the logical flow may proceed to block 64. In block 64, a determination is made as to whether the user has entered any additional characters or text for addition to the starting text 54. If a positive determination is made in block 64, the logical flow may proceed to block 66, where the additional text is added and the suggested images are revised by operation of the message enhancement function 12. Following block 66, the logical flow may proceed back to block 60.

The message enhancement function 12 operates to conduct an image search directed to the updated text message 68. The image search may use a service such as Google images or Flickr to generate a selection of suggested images. In addition, a local search may be conducted based on image tags, dates, names of people, etc. The image search may be conducted on each word as it is written, or only on significant words. That is, insignificant terms, such as "a", "of' and "or", for example, could be filtered out by comparison with an on-device corpus. The image search may be conducted on the entire phrase entered, and may include next word prediction.

With additional reference to Fig. 5B, the user has entered additional text so that the updated text message 68 reads "I look like". The revised images 70 are displayed on the display 14 along with the updated text message 68. The previously displayed images 58 may be replaced with the revised images 70, or may be displayed along with the revised images 70. In Fig. 5B, the lower row of images is a response to the search term "look like". In the illustrated example, the suggested images include an image of a man that resembles his dog, a photograph of an eye, and a photograph of twins. The revised images 70 may be presented all together; ordered in a list by probable relevance; ordered in a treemap diagram by probable relevance, with relevant images being larger than less relevant images; or as a collage or series of collages where the images are intelligently combined and automatically composed. With regard to the illustrated embodiment of Fig. 5B, the user does not select any of the suggested images 70, but continues to enter additional text. Thus, a negative determination is made in block 60, and the logical flow proceeds again to block 64.

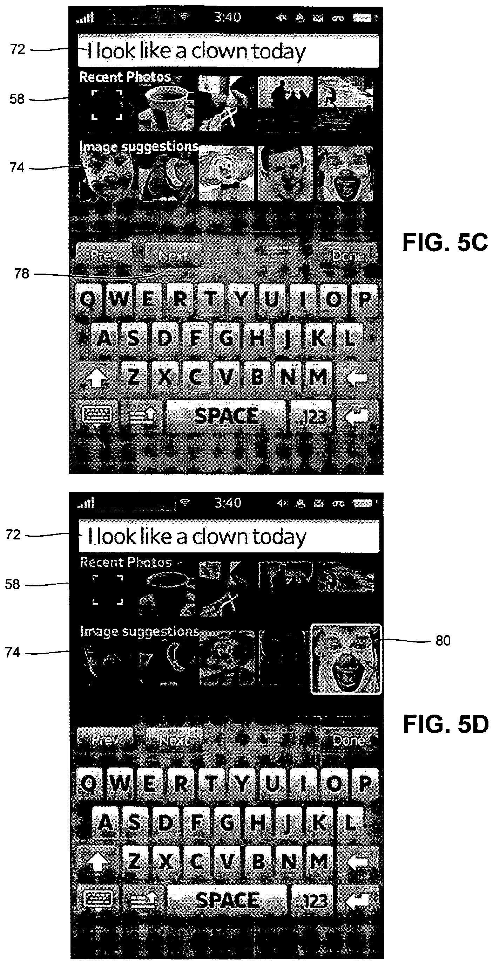

With additional reference to Fig. 5C, the user enters additional text so that the completed text message 72 reads "I look like a clown today". The message enhancement function 12 conducts a further search based on the completed text message 72 and generates a further revised selection of suggested images 74. In the illustrated embodiment, the revised selection of suggested images 74 replaces the previous selection of suggested images 70. The revised selection of suggested images includes various images of clown faces and an image of clown fish.

If the user does not select one of the revised suggested images 74, but does not enter additional text, a conclusion may be made that none of the suggested images is to the liking of the user. In this instance, referring to Fig. 4, a negative determination is made in block 64, and the logical flow proceeds to block 76 where the suggested images may be automatically revised (e.g., after a predetermined time elapses) or revised based on user input. For example, the user may use the "next" button 78 to display a different set of suggested images. Alternatively, scroll icons may be displayed to provide the user with a different set of suggested images. Following block 76, the logical flow may proceed back to block 60.

If a positive determination is made in block 60, the logical flow proceeds to block 62, where the selected image is appended to the text message. With additional reference to Fig. 5D, a user may choose one of the suggested images 74 as the selected image 80. The user may select the selected image 80, for example, by touching the image, or by dragging it to a designated area (not shown). The selected image 80 is then automatically appended to the text message. The image itself may be appended to the text message, or in the case where a service such as Google images, Flickr or Facebook is used, a link to the image may be appended to the text message. The user may then send the image enhanced message, save it, delete it, or process the image enhanced message in accordance with any of the available features of the electronic device 10.

Additionally, while the various figures may show a particular order of executing functional logic blocks, the order of execution of the blocks may be changed relative to the order shown. Also, two or more blocks shown in succession may be executed concurrently or with partial concurrence. Certain blocks may also be omitted. In addition, any number of commands, state variables, semaphores, or messages may be added to the logical flow for purposes of enhanced utility, accounting, performance, measurement, troubleshooting and the like. It is understood that all such variations are within the scope of the present invention

Although the invention has been shown and described with respect to certain exemplary embodiments, it is understood that equivalents and modifications will occur to others skilled in the art upon the reading and understanding of the specification. The present invention includes all such equivalents and modifications, and is limited only by the scope of the following claims.

## Claims

1. A portable electronic device (10) having a message enhancement function (12), comprising:
a display (14) for displaying text input for a message undergoing composition by a user of the electronic device; and
a control circuit (30) configured to:
a. receive the text input from the user for processing by the message enhancement function (12);
b. analyze the text input from the user by the message enhancement function (12);
c. identify one or more items of audiovisual content having a content related to the text input for selectable representation display;
d. rank said one or more items of audiovisual content identified for a selectable representation display;
e. present a first selectable representation of each of the items of audiovisual content on the display;
f. present after a predetermined time elapses an alternative selectable representation of each of the items of audiovisual content on the display if the user does not select one item from the first selectable representation;
g. construct a message that includes the text input and a user selected items of said one or more presented items of audiovisual content;
h. add additional or revised text input from the user;
i. revise the one or more items of audiovisual content identified based on the additional or revised text input; and
j. send the text input with one or more items of audiovisual content appended thereto to a recipient.

2. The electronic device (10) of claim 1, wherein the audiovisual content comprises still images.

3. The electronic device (10) of claim 1, wherein the electronic device further comprises a speaker (36) and the audiovisual content comprises audio.

4. The electronic device (10) of claim 1, wherein the audiovisual content comprises video.

5. The electronic device (10) of any of claims 1-4, wherein the portable electronic device is a mobile telephone.

6. A method of message enhancement, the method comprising the steps of:
displaying text input for a message undergoing composition by a user of a portable electronic device (10) on a display (14) of the portable electronic device;
analyzing the text input from the user;
identifying one or more items of audiovisual content having a content related to the text input for selectable representation display;
rank said one or more items of audiovisual content identified for a selectable representation display;
presenting a first selectable representation of each of the items of audiovisual content on the display (14);
presenting after a predetermined time elapses an alternative selectable representation of each of the items of audiovisual content on the display if the user does not select one item from the first selectable representation;
constructing a message that includes the text input and a user selected items of said one or more presented items of audiovisual content;
adding additional or revised text input from the user;
revising the one or more items of audiovisual content identified based on the additional or revised text input; and
sending the text input with one or more items of audiovisual content appended thereto to a recipient.

7. The method of claim 6, wherein the audiovisual content comprises still images.

8. The method of claim 6, wherein the electronic device (10) further comprises a speaker (36) and the audiovisual content comprises audio.

9. The method of claim 6, wherein the audiovisual content comprises video.

10. The method of any of claims 6-9, wherein the portable electronic device (10) is a mobile telephone.

11. The electronic device (10) of any of claim 1-5, wherein the audiovisual content is any one of photographs or images and, after receiving the text input from the user and prior to analyzing the text, the control circuit is further configured to display a selection of thumbnails of recent photographs or images the user has viewed.

12. The method of any of claims 6-10, wherein the audiovisual content is any one of photographs or images and, prior to analyzing the text input from the user, the method further comprises displaying a selection of thumbnails of recent photographs or images the user has viewed.

## Patentansprüche

1. Tragbare elektronische Vorrichtung (10) mit einer Funktion erweiterter Nachrichten (12), umfassend:
eine Anzeige (14) zum Anzeigen von Texteingabe für eine Nachricht, die eine Zusammensetzung durch einen Benutzer der elektronischen Vorrichtung erfährt; und
eine Steuerschaltung (30), die zum Folgenden ausgelegt ist:
a. Empfangen der Texteingabe von dem Benutzer zur Verarbeitung durch die Funktion erweiterter Nachrichten (12);
b. Analysieren der Texteingabe von dem Benutzer durch die Funktion erweiterter Nachrichten (12);
c. Identifizieren von einem bzw. mehreren Element(en) mit audiovisuellem Inhalt, die einen Inhalt bezüglich der Texteingabe für auswählbare Darstellungsanzeige aufweisen;
d. Klassifizieren von einem bzw. mehreren Element(en) mit audiovisuellem Inhalt, die für eine auswählbare Darstellungsanzeige identifiziert sind;
e. Darstellen einer ersten auswählbaren Darstellung von jedem der Elemente mit audiovisuellem Inhalt auf der Anzeige;
f. Darstellen, nach dem Ablauf eines vorgegebenen Zeitraums, einer alternativen auswählbaren Darstellung von jedem der Elemente mit audiovisuellem Inhalt auf der Anzeige, wenn der Benutzer kein Element aus der ersten auswählbaren Darstellung auswählt;
g. Konstruieren einer Nachricht, die die Texteingabe und ein vom Benutzer ausgewähltes Element aus dem einen bzw. den mehreren dargestellten Element(en) mit audiovisuellem Inhalt beinhaltet;
h. Zugabe von zusätzlicher oder revidierter Texteingabe des Benutzers;
i. Revidieren des einen bzw. der mehreren Element(e) mit audiovisuellem Inhalt, das bzw. die basierend auf der zusätzlichen oder revidierten Texteingabe identifiziert wurde(n); und
j. Senden der Texteingabe mit einem bzw. mehreren dazu angehafteten Element(en) mit audiovisuellem Inhalt an einen Empfänger.

2. Elektronische Vorrichtung (10) nach Anspruch 1, wobei der audiovisuelle Inhalt Standbilder umfasst.

3. Elektronische Vorrichtung (10) nach Anspruch 1, wobei die elektronische Vorrichtung ferner einen Lautsprecher (36) umfasst, und der audiovisuelle Inhalt Audio umfasst.

4. Elektronische Vorrichtung (10) nach Anspruch 1, wobei der audiovisuelle Inhalt Video umfasst.

5. Elektronische Vorrichtung (10) nach einem der Ansprüche 1-4, wobei die tragbare elektronische Vorrichtung ein Mobiltelefon ist.

6. Verfahren zur Erweiterung von Nachrichten, wobei das Verfahren die folgenden Schritte umfasst:
Anzeigen von Textangabe für eine Nachricht, die eine Zusammensetzung durch einen Benutzer einer tragbaren elektronischen Vorrichtung (10) erfährt, auf einer Anzeige (14) der tragbaren elektronischen Vorrichtung;
Analysieren der Texteingabe des Benutzers;
Identifizieren von einem bzw. mehreren Element(en) mit audiovisuellem Inhalt, die einen Inhalt bezüglich der Texteingabe für auswählbare Darstellungsanzeige aufweisen;
Klassifizieren von einem bzw. mehreren Element(en) mit audiovisuellem Inhalt, die für eine auswählbare Darstellungsanzeige identifiziert sind;
Darstellen einer ersten auswählbaren Darstellung von jedem der Elemente mit audiovisuellem Inhalt auf der Anzeige (14);
Darstellen, nach dem Ablauf eines vorgegebenen Zeitraums, einer alternativen auswählbaren Darstellung von jedem der Elemente mit audiovisuellem Inhalt auf der Anzeige, wenn der Benutzer kein Element aus der ersten auswählbaren Darstellung auswählt;
Konstruieren einer Nachricht, die die Texteingabe und ein vom Benutzer ausgewähltes Element aus dem einen bzw. den mehreren dargestellten Element(en) mit audiovisuellem Inhalt beinhaltet;
Zugabe von zusätzlicher oder revidierter Texteingabe des Benutzers;
Revidieren des einen bzw. der mehreren Element(e) mit audiovisuellem Inhalt, das bzw. die basierend auf der zusätzlichen oder revidierten Texteingabe identifiziert wurde(n); und
Senden der Texteingabe mit einem bzw. mehreren dazu angehafteten Element(en) mit audiovisuellem Inhalt an einen Empfänger.

7. Verfahren nach Anspruch 6, wobei der audiovisuelle Inhalt Standbilder umfasst.

8. Verfahren nach Anspruch 6, wobei die elektronische Vorrichtung (10) ferner einen Lautsprecher (36) umfasst, und der audiovisuelle Inhalt Audio umfasst.

9. Verfahren nach Anspruch 6, wobei der audiovisuelle Inhalt Video umfasst.

10. Verfahren nach einem der Ansprüche 6-9, wobei die tragbare elektronische Vorrichtung (10) ein Mobiltelefon ist.

11. Elektronische Vorrichtung (10) nach einem der Ansprüche 1-5, wobei der audiovisuelle Inhalt ein beliebiges aus Fotos oder Bildern ist, und, nach Empfangen der Texteingabe des Benutzers und vor Analysieren des Textes, die Steuerschaltung ferner ausgelegt ist, um eine Auswahl von Thumbnails von aktuellen Fotos oder Bildern anzuzeigen, die der Benutzer betrachtet hat.

12. Verfahren nach einem der Ansprüche 6-10, wobei der audiovisuelle Inhalt ein beliebiges aus Fotos oder Bildern ist, und, vor Analysieren der Texteingabe des Benutzers, das Verfahren ferner das Anzeigen einer Auswahl von Thumbnails von aktuellen Fotos oder Bildern, die der Benutzer betrachtet hat, umfasst.

## Revendications

1. Dispositif électronique portable (10) ayant une fonction d'amélioration de message (12), comprenant :
un affichage (14) pour afficher une entrée de texte pour un message en cours de composition par un utilisateur du dispositif électronique ; et
un circuit de commande (30) configuré pour :
a. recevoir l'entrée de texte issue de l'utilisateur pour traitement par la fonction d'amélioration de message (12) ;
b. analyser l'entrée de texte issue de l'utilisateur par la fonction d'amélioration de message (12) ;
c. identifier un ou plusieurs éléments de contenu audiovisuel ayant un contenu lié à l'entrée de texte pour un affichage de représentation sélectionnable ;
d. classifier ledit un ou plusieurs éléments de contenu audiovisuel pour un affichage de représentation sélectionnable ;
e. présenter une première représentation sélectionnable de chacun des éléments de contenu audiovisuel sur l'affichage ;
f. présenter, après un temps prédéterminé s'est déroulé, une représentation sélectionnable alternative de chacun des éléments de contenu audiovisuel sur l'affichage si l'utilisateur ne choisit pas un élément de la première représentation sélectionnable ;
g. construire un message qui comprend l'entrée de texte et un élément sélectionné par l'utilisateur parmi lesdits un ou plusieurs éléments de contenu audiovisuel ;
h. ajouter une entrée de texte additionnelle ou révisée issue de l'utilisateur ;
i. réviser l'un ou plusieurs éléments de contenu audiovisuel identifiés sur la base de l'entrée de texte révisée ou additionnelle ; et
j. transmettre l'entrée de texte avec un ou plusieurs éléments de de contenu audiovisuel y attachés au destinataire.

2. Dispositif électronique (10) selon la revendication 1, dans lequel le contenu audiovisuel comprend des images fixes.

3. Dispositif électronique (10) selon la revendication 1, dans lequel le dispositif électronique comprend en outre un haut-parleur (36) et le contenu audiovisuel comprend de l'audio.

4. Dispositif électronique (10) selon la revendication 1, dans lequel le contenu audiovisuel comprend de la vidéo.

5. Dispositif électronique (10) selon l'une quelconque des revendications 1 à 4, dans lequel le dispositif électronique portable est un téléphone mobile.

6. Procédé d'amélioration de message, le procédé comprenant les étapes consistant à :
afficher une entrée de texte pour un message en cours de composition par un utilisateur d'un dispositif électronique portable (10) sur un affichage (14) du dispositif électronique portable ;
analyser l'entrée de texte issue de l'utilisateur ;
identifier un ou plusieurs éléments de contenu audiovisuel ayant un contenu lié à l'entrée de texte pour un affichage de représentation sélectionnable ;
classifier ledit un ou plusieurs éléments de contenu audiovisuel pour un affichage de représentation sélectionnable ;
présenter une première représentation sélectionnable de chacun des éléments de contenu audiovisuel sur l'affichage (14) ;
présenter, après un temps prédéterminé s'est déroulé, une représentation sélectionnable alternative de chacun des éléments de contenu audiovisuel sur l'affichage si l'utilisateur ne choisit pas un élément de la première représentation sélectionnable ;
construire un message qui comprend l'entrée de texte et un élément sélectionné par l'utilisateur parmi lesdits un ou plusieurs éléments de contenu audiovisuel ;
ajouter une entrée de texte additionnelle ou révisée issue de l'utilisateur ;
réviser l'un ou plusieurs éléments de contenu audiovisuel identifiés sur la base de l'entrée de texte révisée ou additionnelle ; et
transmettre l'entrée de texte avec un ou plusieurs éléments de contenu audiovisuel y attachés au destinataire.

7. Procédé selon la revendication 6, dans lequel le contenu audiovisuel comprend des images fixes.

8. Procédé selon la revendication 6, dans lequel le dispositif électronique (10) comprend en outre un haut-parleur (36) et le contenu audiovisuel comprend de l'audio.

9. Procédé selon la revendication 6, dans lequel le contenu audiovisuel comprend de la vidéo.

10. Procédé selon l'une quelconque des revendications 6 à 9, dans lequel le dispositif électronique portable (10) est un téléphone mobile.

11. Dispositif électronique (10) selon l'une quelconque des revendications 1 à 5, dans lequel le contenu audiovisuel est l'une quelconque de photographies ou d'images et, après la réception de l'entrée de texte issue de l'utilisateur et avant l'analyse du texte, le circuit de commande est en outre configuré pour afficher une sélection de vignettes de photographies ou d'images récemment vues par l'utilisateur.

12. Procédé selon l'une quelconque des revendications 6 à 10, dans lequel le contenu audiovisuel est l'une quelconque de photographies ou d'images et, avant l'analyse de l'entrée de texte issue de l'utilisateur, le procédé comprend en outre l'affichage d'une sélection de vignettes de photographies ou d'images récemment vues par l'utilisateur.
